# EUROPÄISCHE PATENTSCHRIFT

(11) **EP 1 106 334 B1**
(45) Veröffentlichungstag und Bekanntmachung des Hinweises auf die Patenterteilung: **15.09.2004**
(21) Anmeldenummer: 00126128.8
(22) Anmeldetag: 30.11.2000
(51) Int. Cl.: B29D 12/00, B29D 28/00, B29C 70/34, C04B 35/83

(54) **Verfahren zur Herstellung eines Faserverbund-Bauteils sowie Vorrichtung zur Herstellung eines solchen**
Method for manufacturing a fibre reinforced composite article and apparatus for manufacturing same
Procédé pour la fabrication d'un article en matière composite renforcé par des fibres ainsi que dispositif pour sa fabrication

(30) Priorität: 01.12.1999 DE 19957906
(43) Veröffentlichungstag der Anmeldung: 13.06.2001
(73) Patentinhaber: Schunk Kohlenstofftechnik GmbH, D-35452 Heuchelheim (DE)
(72) Erfinder: Ebert, Marco, 35094 Lahntal (DE); Scheibel, Thorsten, 61231 Bad Nauheim (DE); Henrich, Martin, 35582 Wetzlar (DE); Weiss, Roland, 35625 Hüttenberg (DE)
(74) Vertreter: Stoffregen, Hans-Herbert, Dr. Dipl.-Phys.

(56) Entgegenhaltungen:
- EP-A- 0 603 812
- US-A- 3 678 147
- US-A- 3 910 549
- US-A- 4 137 354
- US-A- 4 357 292
- US-A- 5 330 599

## Beschreibung

Die Erfindung bezieht sich auf ein Verfahren zur Herstellung eines zumindest einen Kreuzungspunkt oder Knoten aufweisenden Faserverbund-Bauteils. Ferner bezieht sich die Erfindung auf eine Vorrichtung zur Herstellung eines aus Faserverbund-Material bestehenden Bauteils umfassend Unter- und Oberstempel eines Presswerkzeuges sowie gegebenenfalls eine Wärmequelle, mittels der das Faserverbund-Material während Druckbeaufschlagung durch das Presswerkzeug erwärmbar ist, wobei einer der Stempel Formnester und der andere Stempel eine dem Verlauf der Formnester folgende Geometrie aufweisen.

Im Hochtemperaturofen- und -anlagenbau, in der Härtereitechnik, Sintertechnik werden vorzugsweise eine Gitterstruktur aufweisende Böden benutzt, die hochtemperaturfest sind und eine hohe mechanische Beständigkeit aufweisen müssen. Hierbei haben sich CFC (kohlenstofffaserverstärkte Kohlenstoff)-Roste bewährt. Diese werden nach dem Stand der Technik aus Streifen zusammengesetzt oder aus Plattenmaterial mittels z. B. Wasserstrahlschneiden hergestellt. Auch sind Roste aus metallischen Hochtemperaturlegierungen in Gusstechnik bekannt.

Bei der Verwendung von CFC-Streifenmaterial muss dieses im Bereich der Schnittpunkte ausgeschnitten werden, um sicherzustellen, dass die Auflagefläche des Gitters in einer Ebene verläuft, also im Bereich der Kreuzungspunkte keine Materialverstärkungen vorliegen.

Entsprechende Arbeiten sind aufwendig und damit kostenträchtig. Gleiches gilt für den Fall, dass aus Plattenmaterial Gitter ausgeschnitten werden, da in diesem.Fall der Materialabfall unerwünscht hoch ist. Die bekannten aus CFC-Materialien bestehenden Roste weisen folglich Nachteile in Bezug auf die Bearbeitungs- und Herstellungskosten sowie in Bezug auf das Fügen bei gesteckten Systemen auf.

Die diesbezüglichen Nachteile ergeben sich möglicherweise nicht bei in Gusstechnik hergestellten Rosten. Diese weisen jedoch eine unerwünschte hohe Wärmekapazität auf und können sich bei sich häufig ändernden Temperaturen verziehen. Auch sind die Einsatztemperaturen begrenzt. Als weitere Nachteile sind Kriechneigung sowie große Wandstärken zu nennen.

Aus der WO 92/11126 ist ein textilförmiger Verbundwerkstoff mit Verstärkungsfasern bekannt, bei dem die Kreuzungs- bzw. Knotenpunkte eine größere Stärke als die angrenzenden Bereiche aufweisen.

Um ein aus Verstärkungsfasern bestehendes Gitter herzustellen, das in unterschiedlichen Richtungen voneinander abweichende Elastizität aufweist, weisen nach der WO 92/11126 erste Faserbündel eine von zweiten Faserbündeln abweichende Anzahl von Fasern auf. Dabei kann nach Herstellen des Gitters durch Druckeinwirkung der Querschnitt des Gitters im Bereich der Knotenpunkte auf den der angrenzenden Bereiche abgestimmt werden.

Aus der EP 0 603 812 A1 ist ein verripptes Flächenelement aus faserverstärktem Kunststoff sowie ein Verfahren und Vorrichtung zu seiner Herstellung gemäß dem einleitenden Teil der Ansprüche 1 und 12 bekannt. Das Flächenelement besteht aus einer Platte und darauf angeordneten Rippen, die sich im Knotenpunkt schneiden. Zur Ausbildung eines die Rippen bildenden Gitters wird ein flächiges Gebilde in ein Formwerkzeug eingebracht, um die Faserstränge aus dem ursprünglich homogenen und flächigen Gebilde im Wesentlichen tangential zu verschieben. In den Kreuzungspunkten können zur Stabilisierung kreuzförmige Elemente eingesetzt werden.

Die US-A-4 357 292 bezieht sich auf ein Formwerkzeug zur Bildung eines aus Glasfasern verstärkten Gitters. Hierzu sind sich zur Öffnung hin konisch erweiternde Nuten in einer Matrize vorgesehen, in die entsprechend angepasste Vorsprünge einer Patrize beim Ausbilden des Gitters eingreifen.

Der vorliegenden Erfindung liegt das Problem zugrunde, ein Verfahren und eine Vorrichtung der eingangs genannten Art so weiterzubilden, dass ein verzugsfreies, leicht und einfach handhabbares Bauteil mit zumindest einem Kreuzungspunkt, insbesondere Rost herstellbar ist, das eine Formstabilität aufweist und kostengünstig herstellbar ist.

Verfahrensmäßig wird das Problem im Wesentlichen dadurch gelöst, dass ein integraler Faservorformling oder eine Preform mit im Wesentlichen gleicher Materialstärke und/oder gleichem oder im wesentlichen gleichem Faservolumengehalt in dem zumindest einen Kreuzungspunkt und angrenzenden Abschnitten des Bauteils in eine seine Endgeometrie vorgebende oder im Wesentlichen vorgebende Form eingebracht, vor oder nach Einbringen in die Form mit einem Monomeren wie Harz oder Polymeren versehen und sodann ausgehärtet wird. Insbesondere ist vorgesehen und dass der ausgehärtete Faservorformling oder Grünling pyrolisiert wird. Dabei erfolgt das Aushärten des Faservorformlings in der Form und das Pyrolysieren wie Carbonisieren und/oder Graphitieren außerhalb der Form.

Insbesondere wird ein Faservorformling verwendet, der als Fasern Rovingstränge oder Faserbänder aus Natur-, Glas-, Aramid-, Kohlenstoff- und/oder Keramikfasern aufweist. Als Harz selbst wird insbesondere ein phenolstämmiges Harz wie insbesondere Resol verwendet.

Auch wenn bevorzugterweise die Preform mit Harz imprägniert bzw. getränkt wird, wobei ein phenolstämmiger Harz hervorzuheben ist, besteht auch die Möglichkeit, dass man neben den Verstärkungsfasern Polymerfasern, die die Matrizes bilden, wie z. B. Thermoplastfasern wie PEEK-Fasern, PPS-Fasern, PA-Fasern, PE-Fasern oder PP-Fasern benutzt.

Des Weiteren ist darauf hinzuweisen, dass die erfindungsgemäße Lehre auch zur Herstellung von Bauteilen bestimmt ist, die aus faserverstärktem Kunststoffmaterial bestehen. Die benutzte Preform kann einem Kalt- oder Warmaushärten unterzogen werden. Entsprechende aus faserverstärktem Kunststoff bestehende Bauteile können des Weiteren zumindest carbonisiert, aber auch carbonisiert und graphitiert werden, so dass Bauteile aus faserverstärktem Kohlenstoff bzw. Graphit zur Verfügung stehen. Als bevorzugte Verstärkungsfasern sind keramische Fasern wie SiC-Fasern oder Kohlenstofffasern zu nennen.

Mit anderen Worten sind mit der erfindungsgemäßen Lehre sowohl faserverstärkte Kunststoffbauteile als auch faserverstärkte Kohlenstoffbauteile herstellbar, die sich insbesondere durch ihre Hochtemperaturbeständigkeit auszeichnen.

Die Faservorformlinge werden insbesondere nach der Tailored Fiber Placement-Technologie (TFP-Technologie) hergestellt. Dabei werden von einer Spule abgewickeltes Fasermaterial derart verlegt und mit Nähfäden verbunden, dass eine Preform gewünschter Geometrie zur Verfügung steht, wobei durch mehrmaliges Übereinandernähen verschiedene Materialdicken möglich sind.

Preformen, die in der TFP-Technologie hergestellt und Kreuzungspunkte wie Knoten aufweisen, zeigen den Vorteil, dass das Faservolumen über die gesamte Preform gleich oder im Wesentlichen gleich ist, sofern Endlosfasern als Verstärkungsfasern benutzt werden. Mit anderen Worten ist das Volumen in dem Kreuzungspunkt bzw. Knoten in etwa gleich den die Kreuzungspunkte bzw. Knoten verbindenden Stegen. Hierin ist ein hervorzuhebender Vorteil gegenüber den nach dem Stand der Technik hergestellten Bauteilen aus Endlosfasern zu sehen, bei denen in den Kreuzungs- bzw. Knotenpunkten ein deutlich erhöhtes Faservolumen, normalerweise doppelt so hoch, vorliegt.

Als Verstärkungsfasern selbst eignen sich insbesondere Cowoven-Fasern, Sitewoven-Fasern, Comingled-Fasern, Intermingled-Fasern, abgemischte Stapelfasergarne, umwindgesponnene Fasern und sonstige hinlänglich bekannte Endlosfasern.

Auch besteht die Möglichkeit, die Preformen im Tow-Placement-Verfahren mit angepasster Fertigpresstechnik oder in Resin-Transfer-Molding-Technik (RTM-Technik) herzustellen.

Durch die an und für sich bekannten Herstellungsverfahren ergibt sich eine Preform, die eine Gitterform aufweisen kann, wobei aufgrund des Verlegens der Verstärkungsfasern und deren Vernähen in den Kreuzungspunkten eine Materialdicke erzielbar ist, die der zwischen den Kreuzungspunkten entspricht. Eine so hergestellte Preform wird sodann mit Harz imprägniert und in einen Stempel eines Presswerkzeuges eingebracht, der seinerseits Formnester aufweist, die der Geometrie der Preform und damit der Endform entspricht. Die Nester selbst sind mit flexiblen Elementen begrenzt, so dass ungeachtet des beim Aushärten erfolgenden Schrumpfens ein Lösen der ausgehärteten Preform (Grünling) durch Druckeinwirkung auf die flexiblen Elementen möglich ist. Während des Aushärtens wirkt auf die Preform ein weiterer Stempel, der der Negativform der die Preform aufnehmenden Nester entspricht. Dabei handelt es sich vorzugsweise um einen aus Metall wie Stahl bestehenden Stempel.

Der so ausgehärtete Grünling wird sodann bei einer Temperatur T₁ mit 500 °C ≤ T1 ≤ 1450 °C, insbesondere 900 °C ≤ T₁ ≤ 1200 °C carbonisiert bzw. bei einer Temperatur T₂ mit 1500 °C ≤ T₂ ≤ 3000 °C, insbesondere 1800 °C ≤ T₂ ≤ 2500 °C, graphitiert.

Eine Vorrichtung zur Herstellung eines aus Faserverbundmaterial bestehenden Bauteils der eingangs genannten Art zeichnet sich insbesondere dadurch aus, dass die Formnester zur Aufnahme von Faserverbundmaterial in Form eines Faservorformlings oder einer Preform von flexiblen, einem Schrumpfen des Faserverbundmaterials beim Erwärmen folgenden Elementen begrenzt sind. Insbesondere ist vorgesehen, dass die Nester durch sich kreuzende Aufnahmen für das Faserverbundmaterial gebildet werden, die von den jeweils eine quaderförmige Geometrie aufweisenden Flexiblen Elementen begrenzt sind. In diesem Fall weist der in die Nester eingreifende bzw. auf diese ausgerichtete weitere Stempel eine gitterförmige Geometrie auf. Der Stempel selbst besteht vorzugsweise aus Metall wie Stahl.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einen gitterförmigen Faservorformling,
- Fig. 2: ein aus dem Faservorformling nach Fig. 1 hergestelltes Gitter und

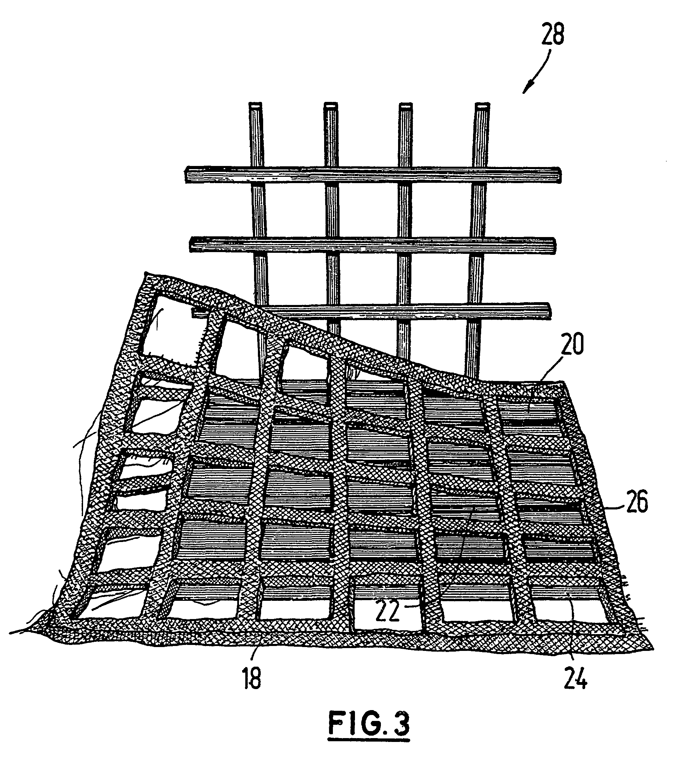

- Fig. 3: Elemente eines Presswerkzeuges zur Herstellung eines Grünlings aus dem Faservorformling nach Fig. 1.

In den nachstehend beschreibenden Ausführungsbeispielen wird ein Faserverbund-Bauteil in Form eines Gitters 10 erläutert, ohne dass hierdurch eine Beschränkung der erfindungsmäßen Lehre erfolgen soll. Vielmehr erstreckt sich dieses auf alle Anwendungsfälle eines nach dem erfindungsgemäßen Verfahren herzustellenden Faserverbund-Bauteils, insbesondere bestimmt zum Einsatz in Hochtemperaturofen- und -anlagenbau, Härtereitechnik, Sintertechnik, als Kolonnenböden für chemische Reaktoren, Kernmaterial für Sandwichstrukturen oder Chargenträgersysteme.

Um ein entsprechendes Bauteil 10 auch in seinen Kreuzungspunkten 12 mit einer Dicke zur Verfügung zu stellen, die nicht von der in den angrenzenden Bereich, also Stegen 14, 16 abweicht, wird ein Faservorformling, eine sogenannte Preform 18 benutzt, die nach der Tailored Fiber Placement-Technologie (TFP-Technologie) oder einem entsprechenden Verfahren hergestellt werden kann. Hierzu werden Verstärkungsfasern wie Rovingstränge und/oder Faser bzw. Faserbänder aus Natur-, Glas-, Aramid-, Polymer-, Kohlenstoff- oder Keramikfasern entsprechend der gewünschten Geometrie verlegt und vernäht, wobei die Fasern in den Kreuzungspunkten 12 derart verlegt werden, dass sich eine Dicke bzw. ein Querschnitt ergibt, der den angrenzenden Abschnitten 14, 16 entspricht.

Auch besteht die Möglichkeit, die Preformen im Tow-Placement-Verfahren mit angepasster Fertigpresstechnik oder im Resin-Transfer-Molding (RTM)-Technik herzustellen.

Unabhängig von zur Anwendung gelangten Verfahren weist die Preform 18 eine im Wesentlichen gleichbleibende Dicke über die gesamte von ihr aufgespannte Fläche auf. Sodann wird die so hergestellte Preform 18 in einen Unterstempel 20 eines Presswerkzeuges eingelegt, und zwar in Nestern 22, die durch sich kreuzende Aufnahmen gebildet werden und einen Geometrieverlauf aufweisen, die der der Preform 18 entspricht. Die Aufnahmen 22 werden von flexiblen Elementen 26 begrenzt, die eine quaderförmige Geometrie aufweisen. Hierzu gehen die flexiblen quaderförmigen Elemente 26 von einer aus Metall bestehenden Basisplatte 24 aus, die derart zueinander angeordnet und beabstandet sind, dass sich eine Nestergeometrie ergibt, die der Preform 18 und damit in etwa der Endgeometrie des Faserverbund-Bauteils 10 entspricht.

Bevor die Preform 18 in den Unterstempel 20 eingebracht wird, tränkt bzw. imprägniert man die Preform 18 mit Harz, insbesondere einem phenolstämmigen Harz. Alternativ oder ergänzend kann man neben den Verstärkungsfasern Polymerfasern benutzen, die die Matrizes bilden, also die Funktion des Harzes ausüben. Als Polymerfasern kommen z. B. Thermoplastfasem wie PEEK-Fasern, PPS-Fasern, PA-Fasern, PE-Fasern oder PP-Fasern in Frage.

Ist die Preform 18 in den Unterstempel 20 eingebracht, so werden aufgrund der Geometrie des Ausführungsbeispiels ein einem Gitter entsprechender Oberstempel 28 auf die Aufnahmen 22 ausgerichtet und sodann Unterstempel 20 und Oberstempel 28 geschlossen, um die Preform 18 mit dem erforderlichen Druck zu beaufschlagen. Gleichzeitig erfolgt eine Wärmebehandlung derart, dass ein Aushärten der mit dem Harz imprägnierten Preform 18 oder ein Schmelzen der Thermoplastfasern erfolgt. Da beim Aushärten ein Schrumpfen der Preform möglich ist, umgeben die Stege 14, 16 die Elemente 26 des Unterstempels 20 klemmend. Da jedoch die Elemente 26 flexibel ausgebildet sind, müssen diese zum Entfernen der ausgehärteten Preform 18, also des Grünlings nur im erforderlichen Umfang zusammengedrückt werden, um den Grünling aus dem Unterstempel 20 zu entfernen.

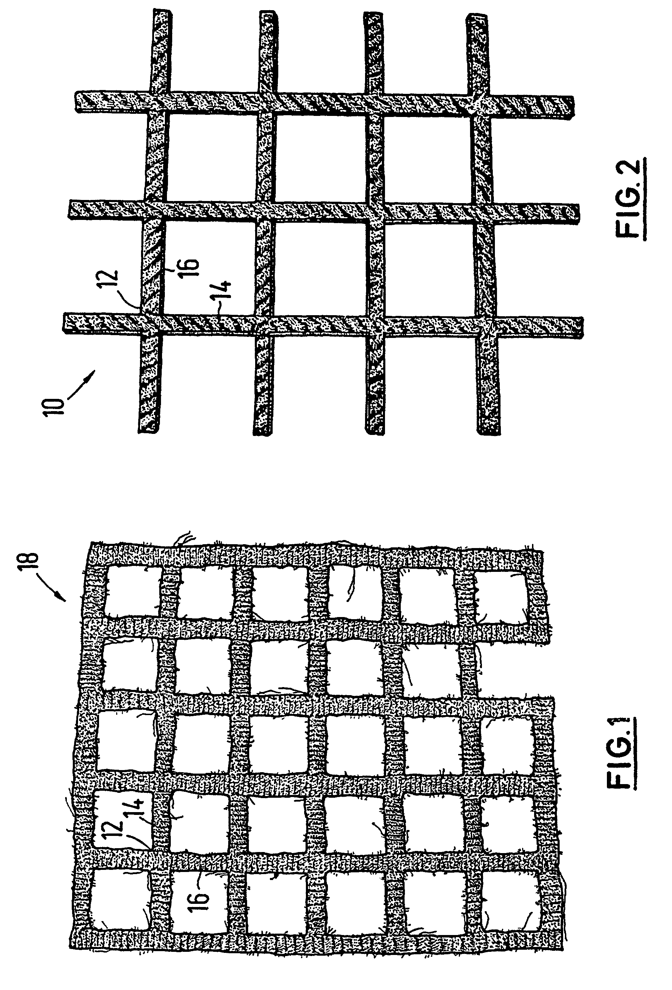

Sodann erfolgt im gewünschten Umfang ein Carbonisieren bzw. Graphitieren des Grünlings, um ein Faserverbund-Bauteil 10 entsprechend der Darstellung der Fig. 2 zu erhalten. Dabei weist erwähntermaßen jeder Kreuzungspunkt 12 eine Dicke auf, die der der Stege 14, 16 entspricht. Dies wiederum bedeutet, dass das Gitter 10 eine Fläche mit ebener Oberfläche aufspannt, so dass ein gewünschter Einsatz insbesondere z. B. als Boden möglich ist.

## Patentansprüche

1. Verfahren zur Herstellung eines zumindest einen Kreuzungs- oder Knotenpunkt aufweisenden Faserverbund-Bauteils,
**dadurch gekennzeichnet,**
**dass** ein integraler Faservorformling oder eine Preform mit im Wesentlichen gleicher Materialstärke und Faservolumengehalt in dem zumindest einen Kreuzungs- oder Knotenpunkt und angrenzenden Abschnitten des Faservorformlings in eine Form eingebracht wird, durch das das Bauteil in seiner Endgeometrie vorgegeben wird, und dass der Faservorformling vor oder nach dem Einbringen in die Form mit einem Monomeren oder Polymeren versehen und dann ausgehärtet wird.

2. Verfahren nach Anspruch 1,
**dadurch gekennzeichnet,**
**dass** der mit einem Monomeren oder Polymeren versehene und ausgehärtete Faservorformling oder Grünling pyrolysiert wird.

3. Verfahren nach Anspruch 1 oder 2,
**dadurch gekennzeichnet,**
**dass** der insbesondere mit einem Harz imprägnierte oder getränkte und/oder mit zumindest einer Polymerfaser als Matrix versehene Faservorformling zum Härten einem Wärmeprozess unterzogen wird.

4. Verfahren nach zumindest einem der vorhergehenden Ansprüche,
**dadurch gekennzeichnet,**
**dass** der Faservorformling vor Einbringen in die Form mit Monomeren wie Harz oder Polymeren versehen wie imprägniert und/oder in der Form dem Wärmeprozess unterzogen wird.

5. Verfahren nach zumindest einem der vorhergehenden Ansprüche,
**dadurch gekennzeichnet,**
**dass** die mit dem Harz imprägnierte Preform während der Wärmebehandlung zwischen einem Unterstempel und einem Oberstempel eines Presswerkzeuges angeordnet wird, wobei einer der Stempel Umfangsendgeometrie der wärmebehandelten Preform (Grünling) vorgebende von flexiblen Elementen begrenzte Formnester aufweist, die insbesondere zum Entfernen des Grünlings aus den Formnestern verformt werden.

6. Verfahren nach zumindest einem der vorhergehenden Ansprüche,
**dadurch gekennzeichnet,**
**dass** der Faservorformling aus Verstärkungsfasern wie Rovingsträngen und/oder Fasern bzw. Faserbändern aus Natur-, Glas-, Aramid-, Polymer-, Kohlenstoff- und/oder Keramikfasern besteht und/oder als Harz ein phenolstämmiges Harz verwendet wird.

7. Verfahren nach zumindest einem der vorhergehenden Ansprüche,
**dadurch gekennzeichnet,**
**dass** die den Faservorformling bildenden Fasern zur Erzielung einer gewünschten den zumindest einen Kreuzungspunkt aufweisenden Form vernäht werden.

8. Verfahren nach zumindest einem der vorhergehenden Ansprüche,
**dadurch gekennzeichnet,**
**dass** der Grünling bei einer Temperatur T₁ mit 500 °C ≤ T₁ ≤ 1450 °C, insbesondere 900 °C ≤ T₁ ≤ 1200 °C, carbonisiert wird und/oder dass der Grünling bei einer Temperatur T₂ mit 1500 °C ≤ T₂ ≤ 3000 °C, insbesondere 1800 °C ≤ T₂ ≤ 2500 °C, graphitiert wird.

9. Verfahren nach zumindest einem der vorhergehenden Ansprüche,
**dadurch gekennzeichnet,**
**dass** als Verstärkungsfasern des Faservorformlings Endlosfasern bzw. Cowoven-Fasern, Sitewoven-Fasern, Comingled-Fasern, Intermingled-Fasern, abgemischte Stapelfasergarne, umwindgesponnene Fasern verwendet werden.

10. Verfahren nach zumindest einem der vorhergehenden Ansprüche,
**dadurch gekennzeichnet,**
**dass** den Verstärkungsfasern Polymerfasern als Matrizes zugegeben werden, wobei insbesondere als Polymerfasern Thermoplastfasern wie PEEK-Fasern, PPS-Fasern, PA-Fasern, PE-Fasern oder PP-Fasern verwendet werden.

11. Verfahren nach zumindest einem der vorhergehenden Ansprüche zur Herstellung eines integralen Gitters gleichbleibender Höhe als Bauteil, zur Herstellung eines Bauteils aus faserverstärktem Kohlenstoff oder zur Herstellung eines Bauteils aus faserverstärktem Kunststoffmaterial, wobei vorzugsweise ein aus faserverstärktem Kunststoffmaterial bestehender Grünling carbonisiert und/oder graphitiert wird.

12. Vorrichtung zur Herstellung eines aus Faserverbundmaterial bestehenden Bauteils (10), umfassend Unter- und Oberstempel (20, 28) eines Presswerkzeuges sowie gegebenenfalls eine Wärmequelle, mittels der das Faserverbundmaterial während seiner Druckbeaufschlagung in dem Presswerkzeug erwärmbar ist, wobei einer der Stempel (10) Formnester (22) und der andere Stempel (28) eine dem Verlauf der Nester folgende Geometrie aufweisen,
**dadurch gekennzeichnet,**
**dass** die Formnester (22) zur Aufnahme von Faserverbundmaterial (18) in Form eines Faservorformlings oder einer Preform von flexiblen im erforderlichen Umfang einem Schrumpfen des Faserverbundmaterials folgenden Elementen (26) begrenzt sind.

13. Vorrichtung nach Anspruch 12,
**dadurch gekennzeichnet,**
**dass** die Nester (22) durch sich kreuzende Aufnahmen für das Faserverbundmaterial bzw. der Preform (18) gebildet sind, zwischen denen die jeweils eine quaderförmige Geometrie aufweisenden flexiblen Elemente (26) angeordnet sind, wobei der auf die sich kreuzenden Aufnahmen (22) ausrichtbare Stempel (28) eine gitterförmige Geometrie aufweist und insbesondere aus Metall wie Stahl besteht.

14. Bauteil hergestellt nach einem Verfahren nach zumindest einem der vorhergehenden Ansprüche.

## Revendications

1. Procédé pour la fabrication d'un article en matière composite renforcé par des fibres et présentant au moins un point de croisement ou de noeud,
**caractérisé en ce que**
une préébauche intégralement en fibres ou une préforme présentant une épaisseur et une teneur volumique de fibres essentiellement égales dans au moins un point de croisement ou de noeud et dans les sections de la préforme qui le délimitent, est introduite dans un moule qui prédéfinit la géométrie définitive de l'article, la préébauche avant son introduction dans le moule étant dotée d'un monomère ou d'un polymère et ensuite durcie.

2. Procédé selon la revendication 1,
**caractérisé en ce qu'**
on pyrolise la préébauche en fibres dotée d'un monomère ou d'un polymère et durcie, ou le compact cru.

3. Procédé selon la revendication 1 ou 2,
**caractérisé en ce que**
la préébauche notamment imprégnée ou mouillée par une résine et/ou dotée d'au moins une fibre de polymère en tant que matrice est soumise à un processus de chauffage pour la durcir.

4. Procédé selon au moins une des revendications précédentes,
**caractérisé en ce que**
la préébauche en fibres, avant son introduction dans le moule, est dotée, par imprégnation par exemple, de monomère comme de la résine ou de polymère et/ou est soumise dans le moule au processus de chauffage.

5. Procédé selon au moins une des revendications précédentes,
**caractérisé en ce que**
la préforme imprégnée de résine est placée, pendant le traitement thermique, entre le plateau supérieur et le plateau inférieur d'un outil de presse, un des plateaux, prédéfinissant la géométrie périphérique finale de la préforme qui a été traitée thermiquement (compact cru), présente des alvéoles de moule délimitées par des éléments flexibles qui sont déformés en particulier pour dégager la préforme des alvéoles du moule.

6. Procédé selon au moins une des revendications précédentes,
**caractérisé en ce que**
la préébauche en fibres est constituée de fibres de renforcement telles que des boyaux de verre textile et/ou des fibres ou des rubans de fibres naturelles, de verre, d'aramide, de polymère, de carbone et/ou de céramique, et/ou comme résine on utilise une résine phénolique.

7. Procédé selon au moins une des revendications précédentes,
**caractérisé en ce que**
les fibres formant la préébauche sont fermées pour obtenir une forme désirée présentant l'au moins un point de croisement.

8. Procédé selon au moins une des revendications précédentes,
**caractérisé en ce que**
le compact cru est carbonisé à une températures T1 telle que 500°C ≤ T1 ≤ 1400°C, en particulier 900°C ≤ T1 ≤ 1200°C, et/ou le compact cru est graphitisé à une température T2 telle que 1500°C ≤ T2 ≤ 3000°C, en particulier entre 1800°C ≤ T2 ≤ 2500°C.

9. Procédé selon au moins une des revendications précédentes,
**caractérisé en ce que**
comme fibres de renforcement de la préébauche, on utilise des fibres sans fin, c'est-à-dire des fibres de type cowoven, sitewoven, comingled, intermingled, des fils démêlés de fibres en vrac, des fibres tissées en spirales.

10. Procédé selon au moins une des revendications précédentes,
**caractérisé en ce que**
aux fibres de renforcement sont ajoutées en tant que matrices des fibres de polymère et notamment, en tant que fibres de polymère, on utilise des fils thermoplastiques tels que des fibres de PEEK, des fibres de PPS, des fibres de PA, des fibres de PE ou des fibres de PP.

11. Procédé selon au moins une des revendications précédentes, pour fabriquer en tant qu'article une grille intégrale de hauteur constante, un article en carbone renforcé par des fibres ou un article en matière plastique renforcé par des fibres, on part de préférence d'un compact cru constitué de matière plastique renforcée par des fibres et on le carbonise et/ou on le graphitise.

12. Dispositif pour fabriquer un article (10) constitué d'un matériau composite fibreux, comprenant le plateau inférieur et le plateau supérieur (20, 28) d'un outil de presse, ainsi que, le cas échéant une source de chaleur par laquelle le matériau composite peut être chauffé pendant qu'il est mis en pression dans l'outil de presse, un des plateaux (10) présentant des alvéoles de moule (22) tandis que l'autre plateau (28) présente une géométrie correspondant au tracé des alvéoles,
**caractérisé en ce que**
les alvéoles de moule (22) servant à accueillir le matériau composite fibreux (18) à l'état de préébauche ou de préforme sont délimitées par des éléments (26) flexibles qui suivent, en se déplaçant de la quantité nécessaire, une contraction du matériau composite fibreux.

13. Dispositif selon la revendication 12,
**caractérisé en ce que**
les alvéoles (22) sont formées par des logements croisés recevant le matériau composite fibreux ou la préforme (18) et entre lesquels sont disposés les éléments flexibles (26) de forme géométrique carrée, et le plateau (28) réglable sur les logements (22) croisés a une forme géométrique de grille constituée en métal, en particulier en acier.

14. Article élaboré selon un procédé ou par un dispositif selon l'une quelconque des revendications précédentes.

## Claims

1. A method for producing a fiber composite component having at least one intersection or node point,
**characterized in**
**that** an integral fiber preform or a preform of substantially the same material thickness and fiber volume content at the at least one intersection or node point and adjoining portions of the preform is placed in a mold, by which the component is predetermined in terms of its final geometry, and that the fiber preform, before or after being placed in the mold, is provided with a monomer or polymer and then cured.

2. The method of claim 1,
**characterized in**
**that** the cured fiber preform or blank being provided with a monomer or polymer is pyrolized.

3. The method of claim 1 or 2,
**characterized in**
**that** the fiber preform, being particularly impregnated or saturated with a resin and/or being provided with at least one polymer fiber as a matrix, is subjected to a heat process for the hardening.

4. The method of at least one of the preceding claims,
**characterized in**
**that** the fiber preform before being placed in a mold is provided or impregnated with a monomer such as resin or a polymer and/or is subjected to the heat process in the mold.

5. The method of at least one of the preceding claims,
**characterized in**
**that** the resin-impregnated preform, during the heat treatment, is disposed between a lower die and an upper die of a pressing tool, where one of the dies has mold voids, which are defined by flexible elements and which predetermine the final circumferential geometry of the heat-treated preform (blank), particularly for removing the blank from the mold voids, said flexible elements are deformed.

6. The method of at least one of the preceding claims,
**characterized in**
**that** the fiber preform comprises reinforcing fibers such as roving strands and/or fibers or slivers comprising natural, glass, aramide, polymer, carbon and/or ceramic fibers and/or as the resin a phenol-derived resin is used.

7. The method of at least one of the preceding claims,
**characterized in**
**that** the fibers forming the fiber preform are stitched to achieve a desired mold that has the at least one intersection point.

8. The method of at least one of the preceding claims,
**characterized in**
**that** the blank is carbonized at a temperature T₁ where 500°C ≤ T₁ ≤ 1450°C, and in particular 900°C ≤ T₁ ≤ 1200°C, and/or that the blank is graphitized at a temperature T₂ where 1500°C ≤ T₂ ≤ 3000°C, and in particular 1800°C ≤ T₂ ≤ 2500°C.

9. The method of at least one of the preceding claims,
**characterized in**
**that** as reinforcing fibers of the fiber preform endless fibers are used and cowoven fibers, site-woven fibers, co-mingled fibers, intermingled fibers, demixed staple fiber yams, respoolspun fibers, respectively.

10. The method of at least one of the preceding claims,
**characterized in**
**that** polymer fibers as matrix are added to the reinforcing fibers, where particularly thermoplastic fibers such as PEEK fibers, PPS fibers, PA fibers, PE fibers or PP fibers are used as polymer fibers.

11. The method of at least one of the preceding claims for producing an integral grid of constant height as component, for producing a component of fiber reinforced carbon, or for producing a component of fiber reinforced plastic material, where preferably a blank comprising fiber reinforced plastic material is carbonized and/or graphitized.

12. An apparatus for producing a component (10) of fiber composite material, comprising lower and upper dies (20, 28) of a pressing tool and optionally a heat source , by means of which source the fiber composite material can be heated during its subjection to pressure in the pressing tool, where one of the dies (10) has mold voids (22) and the other die (28) has a geometry that follows the course of the voids,
**characterized in**
**that** the mold voids (22) for receiving fiber composite material (18) in the form of a fiber preform or a preform are defined by flexible elements (26) which to the requisite extent follow a shrinkage of the fiber composite material.

13. The apparatus of claim 12,
**characterized in**
**that** the voids (22) are formed by intersecting receptacles for the fiber composite material and the preform (18), respectively, between which receptacles the flexible elements (26), each having a blocklike geometry, are disposed, where the die (28) that can be aligned with the intersecting receptacles (22) has a gridlike geometry and in particular comprises metal, such as steel.

14. A component produced by a method of at least one of the preceding claims.
